# EUROPEAN PATENT APPLICATION

(11) **EP 4 017 160 A1**
(43) Date of publication of application: **22.06.2022**
(21) Application number: 19940966.5
(22) Date of filing: 14.08.2019
(51) Int. Cl.: H04W 72/04, H04W 72/12, H04W 74/08

(54) **TERMINAL AND RANDOM ACCESS PROCEDURE CONTROL METHOD**

(71) Applicant: NTT DOCOMO, INC., Chiyoda-Ku Tokyo 100-6150 (JP)
(72) Inventor: TAKAHASHI, Hideaki, Tokyo 100-6150 (JP); HARADA, Kouhei, Tokyo 100-6150 (JP); HANAKI Akihito, Tokyo 100-6150 (JP)
(74) Representative: Hoffmann Eitle
(86) International application number: PCT/JP2019/031926
(87) International publication number: WO 2021/029030

(57) **Abstract**

A terminal including: a reception unit configured to receive, from a base station apparatus, information instructing not to perform a random access procedure even when an even that triggers the random access procedure occurs; and a control unit configured to determine not to perform the random access procedure when the event occurs based on the information.

## Description

### [Technical Field]

The present invention relates to a terminal in a wireless communication system.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving and the like are being studied.

In a wireless communication system such as NR, a random access procedure is performed between the user terminal and the base station apparatus when the user terminal connects to a network, when UL (uplink) synchronization is established, or the like. Various events triggering the random access procedure are described in Non-Patent Document 1.

### [Prior Art Documents]

### [Non-Patent Documents]

[Non-Patent Document 1] 3GPP TS 38.300 V15.6.0 (2019-06)
[Non-Patent Document 2] 3GPP TS 38.321 V15.6.0 (2019-06)
[Non-Patent Document 3] 3GPP TS 38.331 V15.6.0 (2019-06)

### [Summary of Invention]

### [Problem to be Solved by the Invention]

As described in Non-Patent Document 1, one of the triggers for the random access procedure is "UL data arrival during RRC_CONNECTED where there are no PUCCH resources for SR available." That is, when the user terminal is in an RRC connection state and there is no PUCCH resource for sending SR (scheduling request), if UL data occurs, the user terminal performs a random access procedure.

By performing the random access procedure, the user terminal can transmit UL data with allocation of resources for UL data transmission. However, in the prior art, there is a problem in that, even when a resource for UL data transmission can be allocated without performing random access procedure, the random access procedure is performed so that a useless resource is allocated, and UL data transmission is delayed.

The present invention has been made in view of the above-described points, and it is an object of the present invention, in a terminal having a function for executing a random access procedure in response to an event, to provide a technique for suppressing the random access procedure when the event occurs.

### [Means for Solving Problems]

According to the disclosed technique, there is provided a terminal including:
a reception unit configured to receive, from a base station apparatus, information instructing not to perform a random access procedure even when an even that triggers the random access procedure occurs; and
a control unit configured to determine not to perform the random access procedure when the event occurs based on the information.

### [Effects of the Invention]

According to the disclosed technique, in a terminal having a function for executing a random access procedure in response to an event, a technique is provided for suppressing the random access procedure when the event occurs.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram showing an operation example when UL data occurs;
Fig. 4 is a diagram illustrating a basic operation example according to an embodiment;
Fig. 5 is a diagram showing an example of specification modification;
Fig. 6 is a diagram showing an example of specification modification;
Fig. 7 is a diagram showing an example of specification modification;
Fig. 8 is a diagram for explaining an Example;
Fig. 9 shows an example of a functional configuration of a base station apparatus 10 according to an embodiment of the present invention;
Fig. 10 is a diagram showing an example of a functional configuration of a user terminal 20 according to an embodiment of the present invention;
Fig. 11 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. That is, although the base station apparatus 10 and the user terminal 20 described below basically operate according to the existing NR specification, the operation relating to the present invention performs the operation modified from the operation according to the existing NR specification. The present invention is applicable not only to NR but also to any wireless communication system.

In embodiments of the present invention, the duplex method may be a TDD (Time Division Duplex) method, a FDD (Frequency Division Duplex) method, or any other method (e.g., Flexible Duplex, etc.).

In an embodiment of the present invention, a wireless parameter or the like being "configured" may mean that a predetermined value is pre-configured or that a wireless parameter notified from the base station apparatus 10 or the user terminal 20 is configured.

### (System Configuration)

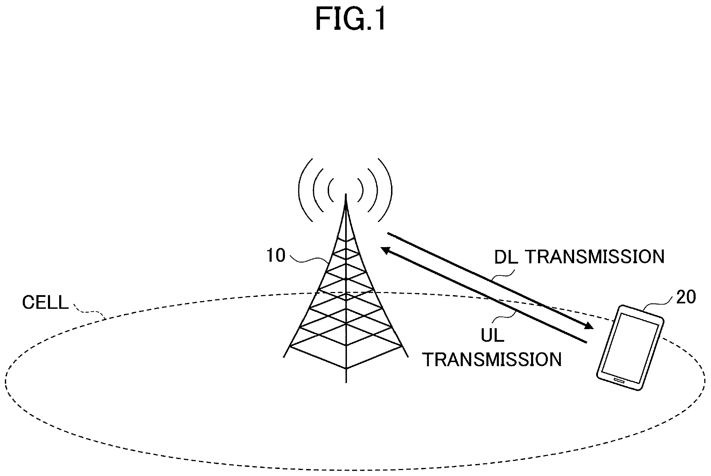

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and a plurality of base station apparatuses 10 and a plurality of user terminals 20 may be provided. The user terminal 20 may be referred to as a "terminal."

The base station apparatus 10 is a communication device that provides one or more cells and performs wireless communication with the user terminal 20. The physical resources of the radio signal are defined in the time domain and the frequency domain, the time domain may be defined in OFDM symbols, and the frequency domain may be defined in subcarriers or resource blocks. The base station apparatus 10 transmits a synchronization signal and system information to the user terminal 20. The synchronization signals are, for example, NR-PSS and NR-SSS. System information is also called broadcast information.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both perform communication by a CA (Carrier Aggregation) via an SCell (Secondary Cell) and a PCell (Primary Cell).

The user terminal 20 is a communication device having a wireless communication function such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10. The user terminal may be referred to as a "terminal."

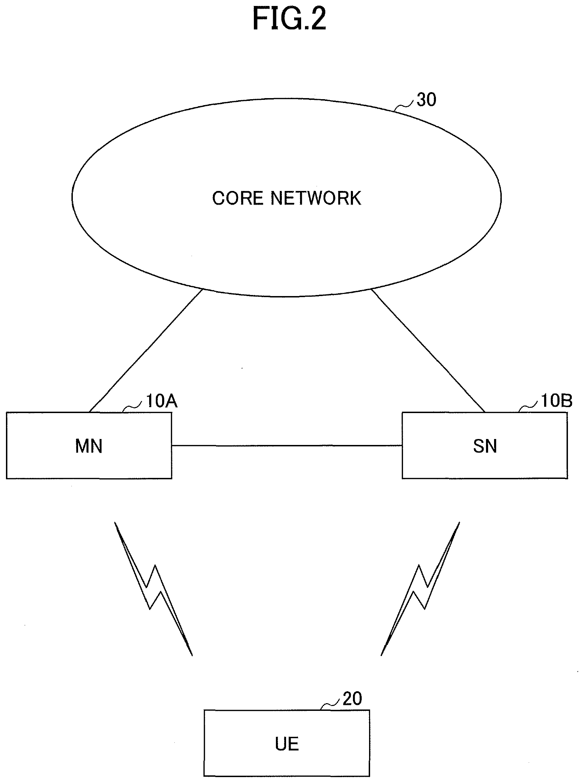

Fig. 2 shows an example of a configuration of a wireless communication system when NR-DC (NR-Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

The cell group provided by the base station apparatus 10A that is an MN is called an MCG (Master Cell Group), and the cell group provided by the base station apparatus 10B that is an SN is called an SCG (Secondary Cell Group).

The processing operation according to this embodiment may be performed in the system configuration shown in Fig. 1, in the system configuration shown in Fig. 2, or may be performed in other system configurations.

### (Example of UL Data Operation)

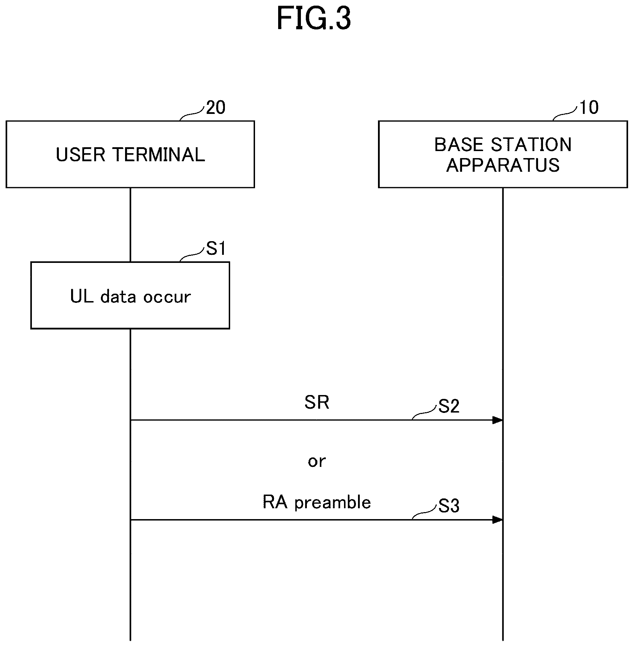

Fig. 3 is a sequence diagram illustrating an example of an operation when UL data occurs in a wireless communication system according to the present embodiment. Fig. 3 assumes that random access procedure suppression described later is not configured on the user terminal 20. In Fig. 3, the user terminal 20 is in an RRC connection state (RRC_connected). Also, the user terminal 20 does not have a PUSCH resource.

In S1 of Fig. 3, UL data occurs in the user terminal 20. At this time, if the user terminal 20 has a PUCCH resource for transmitting a SR, the SR is transmitted to the base station apparatus 10 in S2. Accordingly, an UL resource is subsequently allocated from the base station apparatus 10 to the user terminal 20, and the user terminal 20 can transmit UL data.

On the other hand, when the user terminal 20 does not have a PUCCH resource for SR transmission, in S3, the user terminal 20 starts a random access procedure and transmits a RA preamble. Thereafter, an UL resource is allocated from the base station apparatus 10 to the user terminal 20, and the user terminal 20 can transmit UL data.

For example, when the user terminal 20 receives a request for a CSI report from the base station apparatus 10 together with allocation of an UL resource, the user terminal 20 may be able to transmit a padding BSR (Buffer Status Report) using an available UL resource. This allows the user terminal 20 to request and receive allocation of an UL resource for UL data transmission from the base station apparatus 10.

Even in such a case, according to Non-Patent Document 1, when there is no PUCCH resource for SR transmission, the random access procedure is performed, and there is a problem that UL data transmission may be delayed and the UL resource may be wasted. Hereinafter, an operation example for solving this problem will be described.

### (Basic Operation Example)

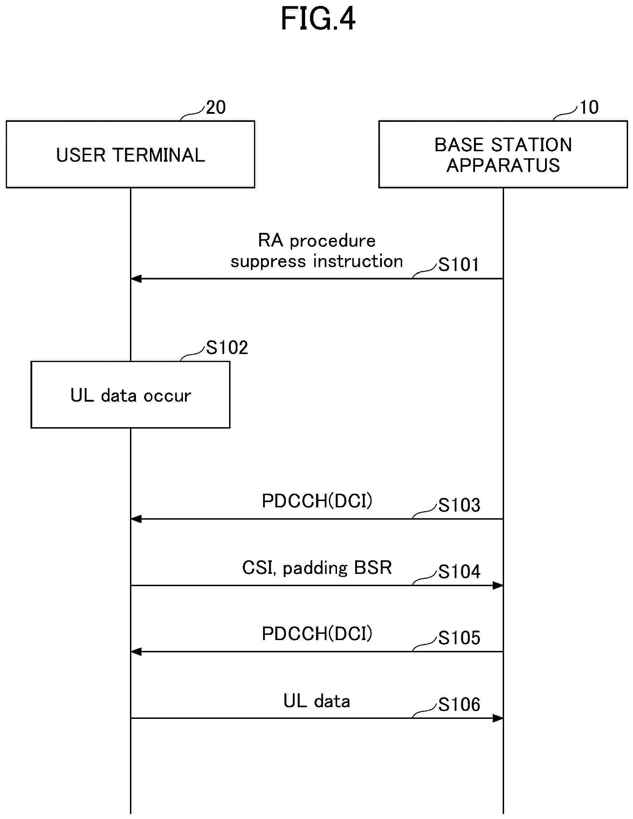

Fig. 4 is a sequence diagram illustrating a basic operation example of a wireless communication system according to the present embodiment. In Fig. 4, the user terminal 20 is in an RRC connected state (RRC_connected) and does not have a PUCCH resource for SR transmission. It should be noted that the present invention is not limited to application to the RRC connected state. The present invention may be applied to a user terminal 20 in a state other than the RRC connected state (RRC_connected).

In S101, the base station apparatus 10 transmits a RA (random access) procedure suppression instruction to the user terminal 20. The RA procedure suppression instruction is information (this may be referred to as a signal, a message, etc.) that indicates that the user terminal 20 does not perform a RA procedure even when UL data occurs when the user terminal 20 does not have a PUCCH resource for transmitting a SR.

The user terminal 20 that receives the RA procedure suppression instruction is configured not to perform a RA procedure even when UL data occurs in an RRC connected state when the user terminal does not have a PUCCH resource for SR transmission.

The RA procedure suppression instruction may be a DCI, a MAC CE, an RLC Control PDU, a PDCP Control PDU, an RRC message, or other information, signals, or data.

In S102, UL data occurs (arrive) in the user terminal 20. Here, in S103, for example, a DCI requesting aperiodic CSI reporting is transmitted from the base station apparatus 10 to the user terminal 20.

The DCI transmitted in S103 includes allocation information of an UL resource, and the user terminal 20 transmits CSI (Channel State Information) by a PUSCH using the UL resource.

If the amount of data that can be transmitted by the allocated UL resource is greater than the amount of data actually transmitted, padding bits of dummy data are transmitted in addition to the UL data.

When the number of padding bits is equal to or more than the size of a BSR (+ subheader) and UL data is present, a padding BSR is transmitted, by the UL resource, from the user terminal 20 to the base station apparatus 10 together with the data (CSI in the example of Fig. 4) for which the UL resource is allocated. S104 of Fig. 4 illustrates this case.

The padding BSR in S104 includes the data amount of UL data generated in S102.

In S105, the base station apparatus 10 transmits a DCI including allocation information of an UL resource for transmitting UL data that occurred in S102 to the user terminal 20. In S106, the user terminal 20 transmits UL data by a PUSCH using the allocated UL resource.

The sequence shown in FIG. 4 is an example. For example, allocation target of the UL resource by which padding BSR can be transmitted may be data other than an aperiodic CSI.

In the example of FIG. 4, as described above, the user terminal 20 is in an RRC connected state (RRC_connected) and does not have a PUCCH resource for SR transmission. Accordingly, if the user terminal 20 follows Non-Patent Document 1, a random access procedure is performed when UL data occurs in S102.

However, since the RA procedure suppression instruction is transmitted to the user terminal 20 in S101 of Fig. 4, the user terminal 20 determines not to perform the random access procedure when UL data occurs in S102.

In this embodiment, among the following multiple events defined in Non-Patent Document 1 as triggering of a random access procedure, the event "UL data arrival during RRC_CONNECTED when there are no PUCCH resources for SR available" is a target of the random access procedure suppression by the RA procedure suppression instruction. When an event other than " UL data arrival during RRC_CONNECTED when there are no PUCCH resources for SR available " occurs, the user terminal 20 performs a random access procedure.
- Initial access from RRC_IDLE;
- RRC Connection Re-establishment procedure;
- DL or UL data arrival during RRC_CONNECTED when UL synchronization status is "non-synchronized";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery.

However, it is an example that the event "UL data arrival during RRC_CONNECTED when there are no PUCCH resources for SR available" is a target for random access procedure suppression by the RA procedure suppression instruction. An event for the target of random access procedure suppression by the RA procedure suppression instruction may be any one of events other than "UL data arrival during RRC_CONNECTED when there are no PUCCH resources for SR available",i.e., " Initial access from RRC_IDLE," "RRC Connection Re-establishment procedure," "DL or UL data arrival during RRC_CONNECTED when UL synchronization status is "non-synchronized," "SR failure," "Request by RRC upon synchronous reconfiguration (e.g. handover)", "Transition from RC_INACTIVE", "To establish time alignment for a secondary TAG"," Request for Other SI (see clause 7.3)" and "Beam failure recovery".

### (Example of Change in Specification)

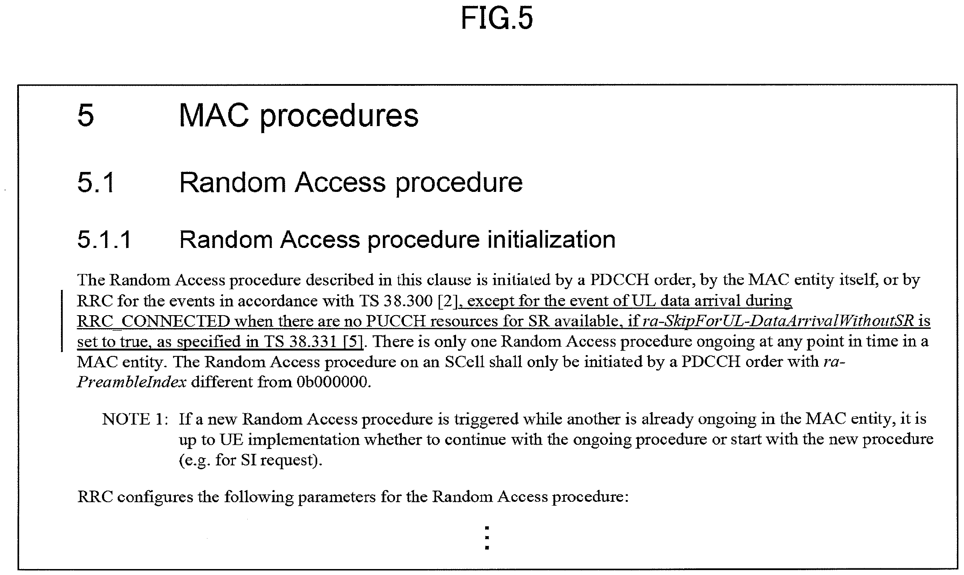

Fig. 5 to Fig. 7 show an example of a specification modification when a RA procedure suppression instruction is sent by an RRC message.

Fig. 5 shows an example of a modification from Non-Patent Document 2. As shown in Fig. 5, " except for the event of UL data arrival during RRC_CONNECTED when there are no PUCCH resources for SR available, if ra-SkipForUL-DataArrivalWithoutSR is set to true, as specified in TS 38.331 [5]" is added. According to this modification, "UL data arrival during RRC_CONNECTED when there are no PUCCH resources for SR available" is excluded from the multiple events that trigger the random access procedure described in Non-Patent Document 1 when the parameter ra-SkipForUL-DataArrivalWithoutSR(true) as the RA procedure suppression instruction is configured to the user terminal 20. That is, if the ra-SkipForUL-DataArrivalWithoutSR=true is configured to the user terminal 20, the user terminal 20 will not perform a random access procedure even if an event of " UL data arrival during RRC_CONNECTED when there are no PUCCH resources for SR available" occurs.

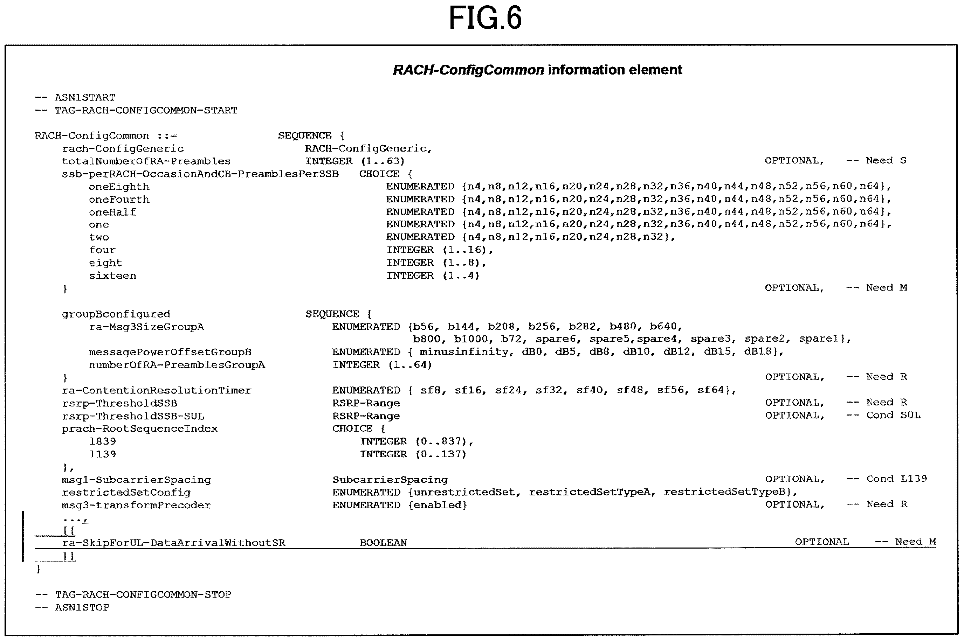

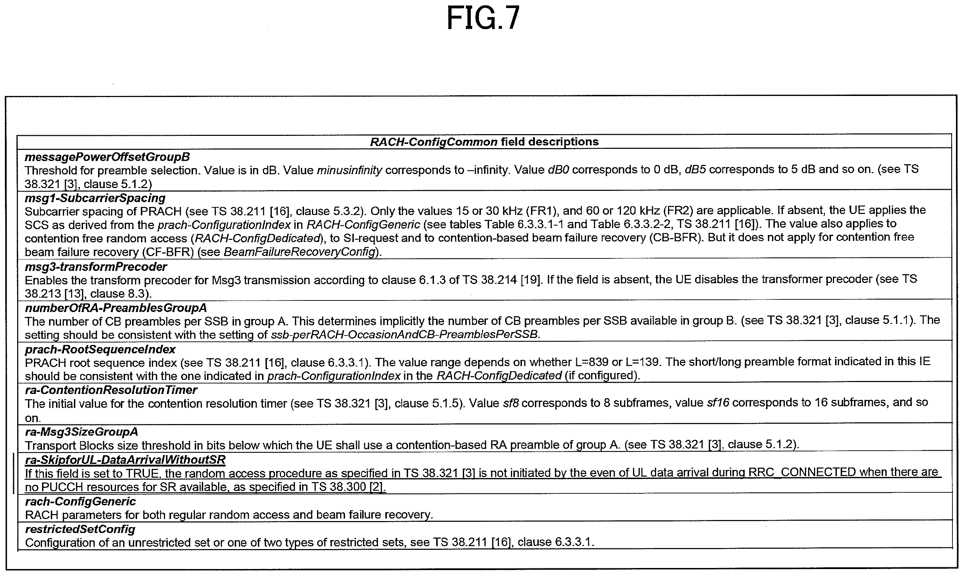

Figs. 6 and 7 show examples of changes from Non-Patent Document 3. As shown in Fig. 6, a ra-SkipForUL-DataArrivalWithoutSR is added to the RACH-ConfigCommon information element that configures a cell-specific random access parameter to the user terminal 20. As shown in FIG. 7, description of the ra-SkipForUL-DataArrivalWithoutSR is added. As illustrated in Fig. 7, when the ra-SkipForUL-DataArrivalWithoutSR is TRUE, the random access procedure is not performed by the event of "UL data arrival during RRC_CONNECTED when there are no PUCCH resources for SR available" among the multiple events specified as triggers for the random access procedure.

### (Example)

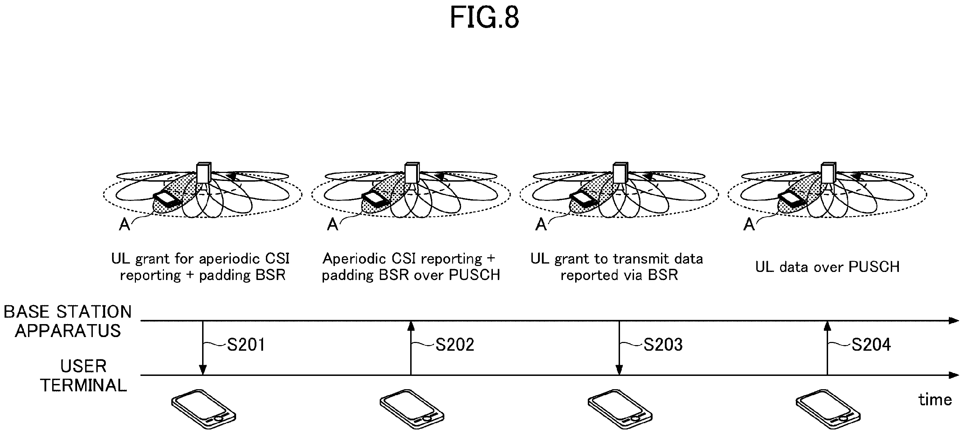

A specific operation example of a wireless communication system realized by a RA procedure suppression instruction will be described with reference to FIG. 8 as an example. In FIG. 8, the user terminal 20 is in an RRC connected state (RRC_connected) and does not have a PUCCH resource for SR transmission. Further, it is assumed that the base station apparatus 10 transmits the ra-SkipForUL-DataArrivalWithoutSR in which TRUE is set to the user terminal 20 prior to S201.

In the example of FIG. 8, the base station apparatus 10 performs beam sweeping using a plurality of beams, each of which is a beam by which transmission and reception are available. The base station apparatus 10 forms a beam of a certain width at predetermined time intervals by changing the direction and periodically sweeps by 360 degrees around the base station apparatus 10.

The user terminal 20 can only transmit and receive data to and from the base station apparatus 10 at a time when the beam is facing the user terminal 20. This feature is utilized in the present embodiment. That is, basically, the base station apparatus 10 transmits a DCI by a PDCCH when a beam is directed to the user terminal 20, and instructs the user terminal 20 to report aperiodic CSI using the DCI. The user terminal 20 then transmits a CSI by a PUSCH at a timing when the beam is directed toward the user terminal 20, and the base station apparatus 10 acquires quality of the channel in the user terminal 20.

The base station apparatus 10 may periodically execute instruction to the user terminal 20 of the aperiodic CSI reporting each time the beam is directed to the user terminal 20, or the base station apparatus 10 may execute it every N times (N is an integer equal to or greater than 1) the beam is directed to the user terminal 20.

The base station apparatus 10 may allocate an UL resource by a DCI of PDCCH instructing aperiodic CSI reporting such that the user terminal 20 can include padding BSR in addition to the aperiodic CSI reporting. By causing the user terminal 20 to report the padding BSR together with the aperiodic CSI reporting, if there is UL data, the user terminal 20 can report CSI and BSR together to the base station apparatus 10.

Amore specific description will be made with reference to FIG. 8. In S201 of Fig. 8, a shaded beam (referred to as a beam A) is directed to the user terminal 20, and the base station apparatus 10 transmits a DCI to the user terminal 20 by PDCCH by this beam A.

This DCI is a DCI that instructs aperiodic CSI reporting and contains UL resource allocation information for aperiodic CSI reporting. The UL resource allocation information is also information that allocates an UL resource larger than an UL resource for padding BSR only such that padding BSR can be transmitted.

In S202, when the beam A is directed to the user terminal 20 again, the user terminal 20 transmits CSI and padding BSR using the UL resource allocated in S201.

In S203, when the beam A is directed to the user terminal 20 next, the base station apparatus 10 which has received the padding BSR in S202 transmits an UL grant of a size by which data amount reported in the BSR can be transmitted, to the user terminal 20 by a PDCCH.

In S204, when the beam A is directed to the user terminal 20 next, the user terminal 20 transmits UL data by a PUSCH according to the resource amount specified by the UL grant of S203.

As described above, in the present embodiment, the user terminal 20 is in the RRC connected state (RRC _connected) and does not have a PUCCH resource for SR transmission. Accordingly, according to Non-Patent Document 1, for example, a random access procedure is performed when UL data occurs before S201.

However, in the present embodiment, since the RA procedure suppression instruction is transmitted to the user terminal 20, the user terminal 20 does not perform the random access procedure when UL data occurs before S201. This avoids useless resource allocation and UE data transmission delays.

In particular, as in the present embodiment, when the base station apparatus 10 assigns UL grant so that the user terminal 20 can send BSR periodically, it is possible to suppress unnecessary random access for assigning UL grant, reduce UL data transmission delay, and improve the efficiency of wireless resource utilization.

### (Apparatus configuration)

Next, a functional configuration example of the base station apparatus 10 and the user terminal 20 that perform the processing and operations described above will be described. The base station apparatus 10 and the user terminal 20 include functions for executing the above-described processing.

### <Base Station apparatus 10>

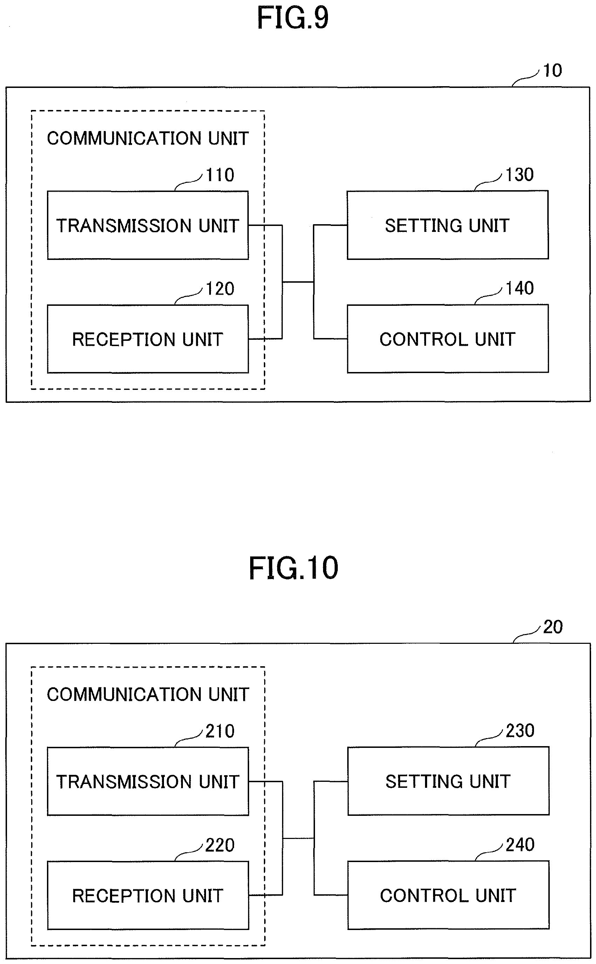

Fig. 9 is a diagram illustrating an example of a functional configuration of the base station apparatus 10. As shown in Fig. 9, the base station apparatus 10 includes a transmission unit 110, a reception unit 120, a setting unit 130, and a control unit 140. The functional configuration shown in Fig. 9 is only one example. As long as the operation according to the embodiments of the present invention can be performed, the functional classification and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The receiving unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20. The transmission unit 110 transmits information instructing the user terminal 20 not to perform the random access procedure even when a certain event that triggers the random access procedure occurs. Further, both the receiving unit 120 and the transmitting unit 110 can perform beam sweeping.

The setting unit 130 stores preconfigured configuration information and various configuration information to be transmitted to the user terminal 20 in the storage device provided by the setting unit 130 and reads the preconfigured configuration information from the storage device as necessary.

The control unit 140 schedules the DL reception or UL transmission of the user terminal 20 through the transmission unit 110. A function unit related to signal transmission in the control unit 140 may be included in the transmission unit 110, and a function unit related to signal reception in the control unit 140 may be included in the receiving unit 120. The transmitter unit 110 may be called a transmitter, and the reception unit 120 may be called a receiver.

### <User terminal 20>

Fig. 10 is a diagram illustrating an example of the functional configuration of the user terminal 20. As shown in Fig. 10, the user terminal 20 includes a transmission unit 210, a reception unit 220, a setting unit 230, and a control unit 240. The functional configuration shown in Fig. 10 is only one example. As long as the operation according to the embodiments of the present invention can be performed, the functional classification and the name of the functional unit may be any one. The transmission unit 210 and the reception unit 220 may be collectively referred to as a communication unit.

The transmission unit 210 creates a transmission signal from the transmission data and wirelessly transmits the transmission signal. The receiving unit 220 receives various signals wirelessly and acquires signals from higher layers from the received signal of the physical layer. The receiving unit 220 has a function to receive the NR-PSS, NR-SSS, NR-PBCH, and DL/UL/SL control signals transmitted from the base station apparatus 10, the DCI by the PDCCH, data by the PDSCH, and the like. For example, the transmitting unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the receiving unit 120 may receive PSCCH, PSSCCH, PSDCH, PSDCH, or PSBCH, etc. from another user terminal 20.

The receiving unit 220 receives information indicating that the random access procedure is not performed even when a certain event that triggers the random access procedure occurs from the base station apparatus 10. When the event occurs, the transmission unit 210 can transmit padding BSR to the base station apparatus 10 using a portion of uplink resources allocated from the base station apparatus 10 without performing a random access procedure.

The setting unit 230 stores various configuration information received from the base station apparatus 10 or the user terminal 20 by the receiving unit 220 in the storage device provided by the setting unit 230 and reads it from the storage device as necessary.

The control unit 240 performs control of the user terminal 20. A function unit related to signal transmission in the control unit 240 may be included in the transmission unit 210, and a function unit related to signal reception in the control unit 240 may be included in the receiving unit 220. The transmission unit 210 may be referred to as a transmitter, and the receiving unit 220 may be referred to as a receiver. The control unit 240 determines that the random access procedure is not performed when the event occurs based on "information indicating that the random access procedure is not performed even when an event that triggers the random access procedure occurs" received from the base station apparatus 10 by the receiving unit 220.

### (Hardware configuration)

The block diagrams (Figs. 9 and 10) used in the description of the above embodiment illustrate blocks in functional units. These functional blocks (configuration units) are realized by any combination of at least one of hardware and software. In addition, a method of realizing each functional block is not particularly limited. That is, each functional block may be realized using one physically or logically coupled device, or may be realized by connecting two or more physically or logically separated devices directly or indirectly (for example, using a wired or wireless connection) and using the plurality of devices. Each functional block may be realized by combining the above-described one device or the above-described plurality of devices with software.

Functions include determining, judging, calculating, computing, processing, deriving, investigating, looking up, ascertaining, receiving, transmitting, output, access, resolving, selecting, choosing, establishing, comparing, assuming, expecting, regarding, broadcasting, notifying, communicating, forwarding, configuring, reconfiguring, allocating, mapping, assigning, and the like, but are not limited thereto. For example, a functional block (configuration unit) that makes transmission function is called a transmitting unit or a transmitter. In any case, as described above, the realization method is not particularly limited.

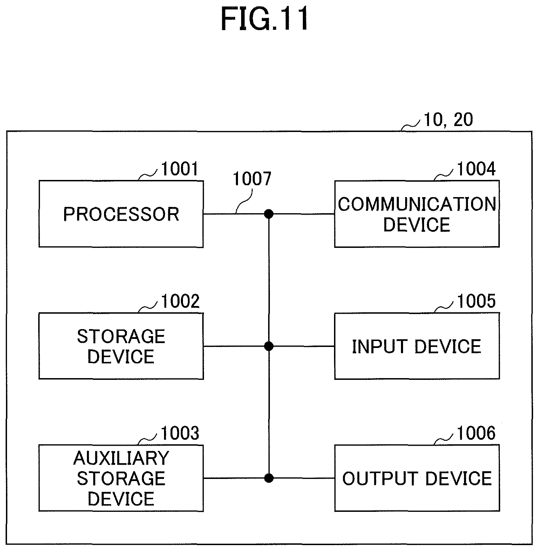

For example, the base station apparatus 10, the user terminal 20, and the like according to an embodiment of the present disclosure may function as a computer that performs processing of the radio communication method according to the present disclosure. Fig. 11 is a diagram illustrating an example of the hardware configuration of the base station apparatus 10 and the user terminal 20 according to an embodiment of the present disclosure. Each of the base station apparatus 10 and the user terminal 20 described above may be physically configured as a computer apparatus including a processor 1001, a storage device 1002, an auxiliary storage device 1003, a communication device 1004, an input device 1005, an output device 1006, a bus 1007, and the like.

In addition, in the following description, the term "device" can be read as a circuit, a unit, and the like. The hardware configuration of each of the base station apparatus 10 and the user terminal 20 may be configured to include one or more devices for each device illustrated in the diagram, or may be configured not to include some devices.

Each function in the base station apparatus 10 and the user terminal 20 can be realized by reading predetermined software (program) onto hardware, such as the processor 1001 and the storage device 1002, so that the processor 1001 performs an operation and controlling communication using the communication device 1004 or controlling at least one of reading and writing of data in the storage device 1002 and the auxiliary storage device 1003.

The processor 1001 controls the entire computer by operating an operating system, for example. The processor 1001 may be configured by a central processing unit (CPU) including an interface with peripheral equipment, a control device, an operation device, a register, and the like. For example, the control unit 140, the control unit 240, and the like described above may be realized by the processor 1001.

In addition, the processor 1001 reads a program (program code), a software module, data, and the like into the storage device 1002 from at least one of the auxiliary storage device 1003 and the communication device 1004, and executes various kinds of processing according to these. As the program, a program causing a computer to execute at least a part of the operation described in the above embodiment is used. For example, the control unit 140 of the base station apparatus 10 illustrated in Fig. 9 may be realized by a control program that is stored in the storage device 1002 and operated by the processor 1001. In addition, for example, the control unit 240 of the user terminal 20 illustrated in Fig. 10 may be realized by a control program that is stored in the storage device 1002 and operated by the processor 1001. Although it has been described that the various kinds of processing described above are executed by one processor 1001, the various kinds of processing described above may be executed simultaneously or sequentially by two or more processors 1001. The processor 1001 may be implemented by one or more chips. In addition, the program may be transmitted from a network through a telecommunication line.

The storage device 1002 is a computer-readable recording medium, and may be configured by at least one of, for example, a Read Only Memory (ROM), an Erasable Programmable ROM (EPROM), an Electrically Erasable Programmable ROM (EEPROM), and a Random Access Memory (RAM) . The storage device 1002 may be called a register, a cache, a main memory, and the like. The storage device 1002 can store a program (program code), a software module, and the like that can be executed to execute the communication method according to an embodiment of the present disclosure.

The auxiliary storage device 1003 is a computer-readable recording medium, and may be configured by at least one of, for example, an optical disk such as a Compact Disc ROM (CD-ROM), a hard disk drive, a flexible disk, and a magneto-optical disk (for example, a compact disk, a digital versatile disk, and a Blu-ray (Registered trademark) disk), a smart card, a flash memory (for example, a card, a stick, a key drive), a floppy (registered trademark) disk, and a magnetic strip. The auxiliary storage device 1003 may be called an auxiliary storage device. The storage medium described above may be, for example, a database including at least one of the storage device 1002 and the auxiliary storage device 1003, a server, or other appropriate media.

The communication device 1004 is hardware (transmitting and receiving device) for performing communication between computers through at least one of a wired network and a radio network, and is also referred to as, for example, a network device, a network controller, a network card, and a communication module. The communication device 1004 may be configured to include, for example, a high-frequency switch, a duplexer, a filter, a frequency synthesizer, and the like in order to realize at least one of frequency division duplex (FDD) and time division duplex (TDD), for example. For example, a transmitting and receiving antenna, an amplifier unit, a transmitting and receiving unit, a transmission line interface, and the like may be realized by the communication device 1004. The transmitting and receiving unit may be implemented so as to be physically or logically separated from the transmitting unit and the receiving unit.

The input device 1005 is an input device (for example, a keyboard, a mouse, a microphone, a switch, a button, and a sensor) for receiving an input from the outside. The output device 1006 is an output device (for example, a display, a speaker, and an LED lamp) that performs output to the outside. In addition, the input device 1005 and the output device 1006 may be integrated (for example, a touch panel).

In addition, respective devices, such as the processor 1001 and the storage device 1002, are connected to each other by the bus 1007 for communicating information. The bus 1007 may be configured using a single bus, or may be configured using a different bus for each device.

In addition, each of the base station apparatus 10 and the user terminal 20 may be configured to include hardware, such as a microprocessor, a digital signal processor (DSP), an Application Specific Integrated Circuit (ASIC), a Programmable Logic Device (PLD), and a Field Programmable Gate Array (FPGA), and some or all of the functional blocks may be realized by the hardware. For example, the processor 1001 may be implemented using at least one of these hardware components.

### (Summary of Embodiments)

According to the present embodiment, at least a terminal and a random access procedure control method shown in items 1 to 4 below are provided.

### (Item 1)

A terminal including:
a reception unit configured to receive, from a base station apparatus, information instructing not to perform a random access procedure even when an even that triggers the random access procedure occurs; and
a control unit configured to determine not to perform the random access procedure when the event occurs based on the information.

### (Item 2)

The terminal as described in item 1, wherein the event is that uplink data occurs when the terminal is in an RRC connected state and the terminal does not have a PUCCH resource for scheduling request transmission.

### (Item 3)

The terminal as described in item 1 or 2, the terminal further including:
a transmission unit configured, when the event occurs, to transmit a padding BSR to the base station apparatus using a part of an uplink resource assigned from the base station apparatus without performing a random access procedure.

### (Item 4)

A random access procedure control method performed by a terminal including:
receiving, from a base station apparatus, information instructing not to perform a random access procedure even when an even that triggers the random access procedure occurs; and
determining not to perform the random access procedure when the event occurs based on the information.

According to any of the configurations described in items 1 to 4, there is provided a technique that enables a user terminal having the function of executing a random access procedure in response to an event to suppress the random access procedure when the event occurs.

### (Supplement to embodiment)

While the embodiment of the invention has been described above, the disclosed invention is not limited to such an embodiment, and those skilled in the art will understand various variations, modifications, alternatives, substitutions, and the like. Although the description has been made using specific numerical examples to facilitate the understanding of the invention, those numerical values are merely examples and any appropriate values may be used unless otherwise specified. The division of the items in the above description is not essential to the invention, and the matters described in two or more items may be used in combination as necessary, or the matter described in a certain item may be applied to the matter described in another item (unless there is a contradiction). The boundaries between functional units or processing units in the functional block diagrams do not always correspond to the boundaries between physical components. The operation of a plurality of functional units may be physically performed by one component, or the operation of one functional unit may be physically performed by a plurality of components. In the processing procedure described in the embodiment, the order of the processing may be changed as long as there is no contradiction. Although the base station apparatus 10 and the user terminal 20 have been described using functional block diagrams for convenience of description of the processing, such equipment may be realized by hardware, software, or a combination thereof. The software operated by the processor of the base station apparatus 10 according to the embodiment of the invention and the software operated by the processor of the user terminal 20 according to the embodiment of the invention may be stored in a random access memory (RAM), a flash memory, a read only memory (ROM), an EPROM, an EEPROM, a register, a hard disk (HDD), a removable disk, a CD-ROM, a database, a server, or any other appropriate storage media.

In addition, the notification of information is not limited to the aspect/embodiment described in the present disclosure, and may be performed using other methods. For example, the notification of information may be performed using physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. In addition, the RRC signaling may be called an RRC message, and may be, for example, an RRC connection setup message or an RRC connection reconfiguration message.

Each aspect/embodiment described in the present disclosure may be applied to at least one of systems, which use Long Term Evolution (LTE), LTE-Advanced (LTE-A), SUPER 3G, IMT-Advanced, 4th generation mobile communication system (4G), 5th generation mobile communication system (5G), Future Radio Access (FRA), and new Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and next-generation systems extended based on these. In addition, a plurality of systems may be combined (for example, a combination of 5G and at least one of LTE and LTE-A) to be applied.

In the processing procedure, sequence, flowchart, and the like in each aspect/embodiment described in this specification, the order may be changed as long as there is no contradiction. For example, for the methods described in this disclosure, elements of various steps are presented using an exemplary order, and the invention is not limited to the specific order presented.

The specific operation described as being performed by the base station apparatus 10 in this specification may be performed by its upper node in some cases. In a network including one or more network nodes each having the base station apparatus 10, it is obvious that various operations performed for communication with the user terminal 20 can be performed by at least one of the base station apparatus 10 and other network nodes (for example, MME, S-GW, and the like can be considered, but the network node is not limited thereto) other than the base station apparatus 10. Although a case where the number of other network nodes other than the base station apparatus 10 is one has been exemplified above, the other network nodes may be a combination (for example, MME and S-GW) of a plurality of other network nodes.

Information or signals described in the present disclosure can be output from a higher layer (or a lower layer) to a lower layer (or a higher layer). Information or signals described in the present disclosure may be input and output through a plurality of network nodes.

Information or the like that is input and output may be stored in a specific place (for example, a memory) or may be managed using a management table. The information or the like that is input and output can be overwritten, updated, or added. The information or the like that is output may be deleted. The information or the like that is input may be transmitted to another device.

The judging in the present disclosure may be performed based on a value expressed by 1 bit (0 or 1), may be performed based on Boolean (true or false), or may be performed by numerical value comparison (for example, comparison with a predetermined value).

Software, regardless of whether this is called software, firmware, middleware, microcode, a hardware description language, or any other name, should be interpreted broadly to mean instructions, instruction sets, codes, code segments, program codes, programs, subprograms, software modules, applications, software applications, software packages, routines, subroutines, objects, executable files, execution threads, procedures, functions, and the like.

In addition, software, instructions, information, and the like may be transmitted and received through a transmission medium. For example, in a case where software is transmitted from a website, a server, or other remote sources using at least one of the wired technology (coaxial cable, optical fiber cable, twisted pair, digital subscriber line (DSL), and the like) and the wireless technology (infrared, microwave, and the like), at least one of the wired technology and the wireless technology is included within the definition of the transmission medium.

The information, signals, and the like described in this disclosure may be expressed using any of a variety of different technologies. For example, data, instructions, commands, information, signals, bits, symbols, and chips that can be referred to throughout the above description may be represented by voltage, current, electromagnetic waves, magnetic field or magnetic particles, light field or photon, or any combination thereof.

In addition, the terms described in the present disclosure and the terms necessary for understanding the present disclosure may be replaced with terms having the same or similar meaning. For example, at least one of the channel and the symbol may be a signal (signaling). In addition, the signal may be a message. In addition, a component carrier (CC) may be called a carrier frequency, a cell, a frequency carrier, or the like.

The terms "system" and "network" used in this disclosure are used interchangeably.

In addition, the information, parameters, and the like described in the present disclosure may be expressed using an absolute value, may be expressed using a relative value from a predetermined value, or may be expressed using another corresponding information. For example, the radio resource may be indicated by an index.

The names used for the parameters described above are not limiting names in any way. In addition, equations and the like using these parameters may be different from those explicitly disclosed in the present disclosure. Since various channels (for example, PUSCH, a PUCCH, and a PDCCH) and information elements can be identified by any suitable names, various names allocated to these various channels and information elements are not limiting names in any way.

In the present disclosure, terms such as "base station (BS)", "radio base station", "base station apparatus", "fixed station", "NodeB", "eNodeB (eNB)", "gNodeB (gNB)","access point", "transmission point", "reception point", "transmission/reception point", "cell", "sector", "cell group", "carrier", and "component carrier" can be used interchangeably. The base station may also be referred to as terms, such as a macro cell, a small cell, a femto cell, and a pico cell.

The base station can include one or more (for example, three) cells. When the base station includes a plurality of cells, the entire coverage area of the base station can be divided into a plurality of smaller areas, and each of the smaller area can also provide a communication service using a base station subsystem (for example, a remote radio head (RRH). The term "cell" or "sector" refers to a part or the entirety of the coverage area of at least one of a base station and a base station subsystem that provides communication services in this coverage.

In the present disclosure, terms such as "mobile station (MS)", "user terminal", "user terminal (UE)", and "terminal" can be used interchangeably.

The mobile station may also be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms depending on those skilled in the art.

At least one of the base station and the mobile station may be called a transmitting device, a receiving device, a communication device, and the like. In addition, at least one of the base station and the mobile station may be a device mounted on a moving body, the moving body itself, and the like. The moving body may be a vehicle (for example, a car or an airplane), an unmanned moving body (for example, a drone or a self-driving car), or a robot (maned or unmanned) . In addition, at least one of the base station and the mobile station necessarily includes a device that does not move during a communication operation. For example, at least one of the base station and the mobile station may be an Internet of Things (IoT) device, such as a sensor.

In addition, the base station apparatus in the present disclosure may be read as user terminal. For example, each aspect/embodiment of the present disclosure may be applied to a configuration in which communication between base station apparatus and user terminal is replaced with communication between a plurality of pieces of user terminals 20 (which may be called, for example, Device-to-Device (D2D) or Vehicle-to-Everything (V2X)). In this case, the user terminal 20 may have the above-described function of the base station apparatus 10. In addition, terms such as "uplink" and "downlink" may be read as terms corresponding to terminal-to-terminal communication (for example, "side"). For example, an uplink channel, a downlink channel, and the like may be read as a side channel.

Similarly, the user terminal in the present disclosure may be read as base station apparatus. In this case, the base station apparatus may have the above-described function of the user terminal.

The terms "determining" used in the present disclosure may involve a wide variety of operations. For example, "determining" can include considering judging, calculating, computing, processing, deriving, investigating, looking up (search, inquiry) (for example, looking up in a table, database, or another data structure), and ascertaining as "determining". In addition, "determining" can include considering receiving (for example, receiving information), transmitting (for example, transmitting information), input, output, accessing (for example, accessing data in a memory) as "determining". In addition, "determining" can include considering resolving, selecting, choosing, establishing, comparing, and the like as "determining". In other words, "determining" can include considering any operation as "determining". In addition, "determining" may be read as "assuming", "expecting", "considering", and the like.

The terms "connected" and "coupled" or variations thereof mean any direct or indirect connection or coupling between two or more elements, and can include a case where one or more intermediate elements are present between two elements "connected" or "coupled" to each other. The coupling or connection between elements may be physical, logical, or a combination thereof. For example, "connection" may be read as "access". When used in this disclosure, two elements can be considered to be "connected" or "coupled" to each other using at least one of one or more wires, cables, and printed electrical connections and using some non-limiting and non-comprehensive examples, such as electromagnetic energy having wavelengths in a radio frequency domain, a microwave domain, and a light (both visible and invisible) domain.

The reference signal may be abbreviated as RS (Reference Signal), and may be called Pilot according to the applied standard.

The description "based on" used in this disclosure does not mean "based only on" unless otherwise specified. In other words, the description "based on" means both "based only on" and "based at least on".

Any reference to elements using designations such as "first" and "second" used in the present disclosure does not generally limit the quantity or order of the elements . These designations can be used in the present disclosure as a convenient method for distinguishing between two or more elements. Therefore, references to first and second elements do not mean that only two elements can be adopted or that the first element should precede the second element in any way.

"Means" in the configuration of each device described above may be replaced with "unit", "circuit", "device", and the like.

When "include", "including", and variations thereof are used in the present disclosure, these terms are intended to be inclusive similarly to the term "comprising". In addition, the term "or" used in the present disclosure is intended not to be an exclusive-OR.

A radio frame may be configured by one or more frames in the time domain. Each of one or more frames in the time domain may be referred to as a subframe. In addition, the subframe may be configured by one or more slots in the time domain. The subframe may be a fixed time length (for example, 1 ms) that does not depend on numerology.

Numerology may be a communication parameter applied to at least one of transmission and reception of a certain signal or channel. Numerology may indicate at least one of, for example, subcarrier spacing (SCS), bandwidth, symbol length, cyclic prefix length, transmission time interval (TTI), the number of symbols per TTI, radio frame configuration, specific filtering processing performed in the frequency domain by the transceiver, and specific windowing processing performed in the time domain by the transceiver.

A slot may be configured by one or more symbols (Orthogonal Frequency Division Multiplexing (OFDM) symbol, Single Carrier Frequency Division Multiple Access (SC-FDMA) symbol, and the like) in the time domain. A slot may be a time unit based on numerology.

A slot may include multiple mini-slots. Each mini-slot may be configured by one or more symbols in the time domain. In addition, the mini-slot may be called a subslot. A mini-slot may be configured by a smaller number of symbols than that in a slot. A PDSCH (or a PUSCH) transmitted in time units larger than the mini-slot may be referred to as PDSCH (or PUSCH) mapping type A. A PDSCH (or a PUSCH) transmitted using a mini-slot may be referred to as PDSCH (or PUSCH) mapping type B.

Each of the radio frame, the subframe, the slot, the mini-slot, and the symbol indicates a time unit when transmitting a signal. The radio frame, the subframe, the slot, the mini-slot, and the symbol may have different names corresponding thereto.

For example, one subframe may be called a transmission time interval (TTI), a plurality of consecutive subframes may be called a TTI, and one slot or one mini-slot may be called a TTI. That is, at least one of the subframe and the TTI may be a subframe (1 ms) in the known LTE, a period (for example, 1 to 13 symbols) shorter than 1 ms, or a period longer than 1 ms. In addition, the unit indicating the TTI may be called a slot, a mini-slot, or the like, instead of a subframe.

Here, the TTI refers to, for example, a minimum time unit of scheduling in radio communication. For example, in the LTE system, the base station performs scheduling for allocating radio resources (frequency bandwidth, transmission power, and the like that can be used in each user terminal 20) to each user terminal 20 in TTI units. In addition, the definition of the TTI is not limited to this.

The TTI may be a transmission time unit, such as a channel-encoded data packet (transport block), a code block, and a code word, or may be a processing unit, such as scheduling and link adaptation. In addition, when a TTI is given, a time section (for example, the number of symbols) in which a transport block, a code block, a code word, and the like are actually mapped may be shorter than the TTI.

In addition, when one slot or one mini-slot is called a TTI, one or more TTIs (that is, one or more slots or one or more mini-slots) may be a minimum time unit for scheduling. In addition, the number of slots (the number of mini-slots) configuring the minimum time unit of the scheduling may be controlled.

A TTI having a time length of 1 ms may be called a normal TTI (TTI in LTE Rel. 8-12), a long TTI, a normal subframe, a long subframe, a slot, and the like. A TTI shorter than the normal TTI may be called a short TTI, a partial or fractional TTI, a short subframe, a mini-slot, a subslot, a slot, and the like.

In addition, a long TTI (for example, a normal TTI or a subframe) may be read as a TTI having a time length exceeding 1 ms, and a short TTI may be read as a TTI shorter than the TTI length of the long TTI and equal to or longer than 1 ms.

A resource block (RB) is a resource allocation unit in the time domain and the frequency domain, and may include one or more consecutive subcarriers in the frequency domain. The number of subcarriers included in the RB may be the same regardless of numerology, and may be, for example, 12. The number of subcarriers included in the RB may be determined based on numerology.

In addition, the time domain of the RB may include one or more symbols, and may be the length of one slot, one mini-slot, one subframe, or one TTI. One TTI, one subframe, and the like may each be configured by one or more resource blocks.

In addition, one or more RBs may be called a physical resource block (PRB: Physical RB), a sub-carrier group (SCG), a resource element group (REG), a PRB pair, an RB pair, and the like.

In addition, the resource block may be configured by one or more resource elements (REs). For example, one RE may be a radio resource area of one subcarrier and one symbol.

A bandwidth part (BWP) (which may be called a partial bandwidth or the like) may indicate a subset of consecutive common resource blocks (common RBs) for certain numerology in a certain carrier. Here, the common RB may be specified by an index of the RB with the common reference point of the carrier as a reference. The PRB may be defined by a certain BWP and numbered within the BWP.

The BWP may include a BWP for UL (UL BWP) and a BWP for DL (DL BWP). For the UE, one or more BWPs may be set in one carrier.

At least one of the set BWPs may be active, and it may not be assumed that the UE transmits and receives a predetermined signal/channel outside the active BWP. In addition, "cell", "carrier", and the like in the present disclosure may be read as "BWP".

The structures of the radio frame, the subframe, the slot, the mini-slot, and the symbol described above are merely examples. For example, the number of subframes included in a radio frame, the number of slots per subframe or radio frame, the number of mini-slots included in a slot, the number of symbols and RBs included in a slot or mini-slot, the number of subcarriers included in an RB, the number of symbols in the TTI, the symbol length, the cyclic prefix (CP) length, and the like can be changed in various ways.

In the present disclosure, in a case where articles, for example, a, an, and the in English, are added by translation, the present disclosure may include that nouns subsequent to these articles are plural.

In the present disclosure, the expression "A and B are different" may mean "A and B are different from each other". In addition, the expression may mean that "A and B each are different from C". Terms such as "separate", "coupled" may be interpreted similarly to "different".

Each aspect/embodiment described in the present disclosure may be used alone, may be used in combination, or may be switched and used according to execution. In addition, the notification of predetermined information (for example, notification of "X") is not limited to being explicitly performed, and may be performed implicitly (for example, without the notification of the predetermined information).

While the present disclosure has been described in detail, it is apparent to those skilled in the art that the present disclosure is not limited to the embodiment described in the present disclosure. The present disclosure can be implemented as modified and changed aspects without departing from the spirit and scope of the present disclosure defined by the description of the claims. Therefore, the description of the present disclosure is intended for illustrative purposes, and has no restrictive meaning to the present disclosure.

### [Description of Symbols]

- 10: BASE STATION APPARATUS
- 110: TRANSMITTING UNIT
- 120: RECEIVING UNIT
- 130: SETTING UNIT
- 140: CONTROL UNIT
- 20: USER TERMINAL
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal comprising:
a reception unit configured to receive, from a base station apparatus, information instructing not to perform a random access procedure even when an even that triggers the random access procedure occurs; and
a control unit configured to determine not to perform the random access procedure when the event occurs based on the information.

2. The terminal as claimed in claim 1, wherein the event is that uplink data occurs when the terminal is in an RRC connected state and the terminal does not have a PUCCH resource for scheduling request transmission.

3. The terminal as claimed in claim 1 or 2, the terminal further comprising:
a transmission unit configured, when the event occurs, to transmit a padding BSR to the base station apparatus using a part of an uplink resource assigned from the base station apparatus without performing a random access procedure.

4. A random access procedure control method performed by a terminal comprising:
receiving, from a base station apparatus, information instructing not to perform a random access procedure even when an even that triggers the random access procedure occurs; and
determining not to perform the random access procedure when the event occurs based on the information.
